# EUROPÄISCHE PATENTANMELDUNG

(11) **EP 0 897 739 A2**
(43) Veröffentlichungstag der Anmeldung: **24.02.1999**
(21) Anmeldenummer: 98107931.2
(22) Anmeldetag: 30.04.1998
(51) Int. Cl.: B01D 46/52

(54) **Filteranordnung sowie Verfahren zu deren Herstellung**

(30) Priorität: 21.08.1997 DE 19736290
(71) Anmelder: Firma Carl Freudenberg, 69469 Weinheim (DE)
(72) Erfinder: Knudsen, Jörgen, 74918 Angelbachtal (DE); Schmidt, Wolfgang, 69514 Laudenbach (DE)

(57) **Zusammenfassung**

Filteranordnung, umfassend einen Faltenpack (4), der dichtend in einem Gehäuse (1) angeordnet ist. Das Gehäuse (1) ist herstellungsbedingt einstückig tiefgezogen.

## Beschreibung

### Technisches Gebiet

Die Erfindung betrifft eine Filteranordnung sowie ein Verfahren zu deren Herstellung.

### Stand der Technik

Es sind Filteranordnungen bekannt, bei denen das Gehäuse aus separat erzeugten Seitenplatten besteht, die zusammengesteckt und anschließend zur Herstellung einer dichten Verbindung verklebt werden.

Derartige Gehäuse sind in fertigungstechnischer und wirtschaftlicher Hinsicht wenig zufriedenstellend.

### Darstellung der Erfindung

Der Erfindung liegt die Aufgabe zugrunde, eine Filteranordnung zu zeigen, die schnell, einfach und kostengünstig herstellbar ist.

Diese Aufgabe wird erfindungsgemäß mit den Merkmalen der unabhängigen Ansprüche gelöst. Auf vorteilhafte Ausgestaltungen nehmen die darauf rückbezogenen Ansprüche bezug.

Zur Lösung der Aufgabe ist es vorgesehen, daß das Gehäuse herstellungsbedingt einstückig tiefgezogen ausgebildet ist. Bevorzugt besteht das Gehäuse aus einem polymeren Werkstoff. Die Herstellung eines Gehäuses aus einem derartigen Werkstoff ist besonders einfach und kostengünstig durchführbar, bezogen auf ein Gehäuse, das aus vier Seitenplatten besteht, die zusammengesteckt und anschließend zur Herstellung einer dichten Verbindung miteinander verklebt werden.

Ein Gehäuse aus polymerem Werkstoff kann beispielsweise auch in Bereichen hoher Luftfeuchtigkeit eingesetzt werden, ohne daß der Werkstoff des Gehäuses rostet oder aufgeweicht wird.

Die Filteranordnung kann eine Gehäuse umfassen und einen auf seiner gesamten Höhe mit der Dichtung umfangsseitig zumindest einmal vollständig umschlossenen Faltenpack, der unter elastischer Vorspannung dichtend und ungehaftet im Gehäuse angeordnet ist. Dadurch kann die Montage der vormontierbaren Einheit, bestehend aus dem von der Dichtung umschlossenen Faltenpack in das Gehäuse deutlich schneller erfolgen. Die Filteranordnung ist einfach und kostengünstig herstellbar.

Nach einer vorteilhaften Ausgestaltung kann es vorgesehen sein, daß das Gehäuse abströmseitig zumindest eine nach innen vorspringenden Anschlag für den Faltenpack aufweist. Die Montage des mit der Dichtung umschlossenen Faltenpacks im Gehäuse ist dadurch weiter vereinfacht und Montagefehler sind auf ein Minimum begrenzt. Zur Montage der vormontierbaren Einheit, bestehend aus Faltenpack und Dichtung im Gehäuse, wird die Einheit von der Anströmseite des Gehäuses solange eingeschoben bis der abströmseitige Rand der Einheit den Anschlag des Gehäuses anliegend berührt. Der Faltenpack und das Gehäuse sind dann optimal zueinander positioniert.

Bevorzugt besteht die Dichtung aus einem Vliesstoff und der Faltenpack aus einem Glasfaserpapier. In Abhängigkeit von den jeweiligen Gegebenheiten des Anwendungsfalles können die Dichtung und der Faltenpack aus dem gleichen Vliesstoff bestehen. Hierbei ist von Vorteil, daß die Dichtung und der Faltenpack im Anschluß an Ihre Verwendung gemeinsam entsorgt/ einer Wiederverwertung zugeführt werden können.

Der Faltenpack und die Dichtung sind bevorzugt adhäsiv verbunden, beispielsweise miteinander verklebt.

Demgegenüber besteht jedoch auch die Möglichkeit, daß die Dichtung in sich geschlossen ringförmig ausgebildet ist und den Faltenpack unter Vorspannung ungehaftet und dichtend umschließt.

Der zuerst beschriebenen Ausführungsform wird jedoch der Vorzug gegeben, da eine Relativlagerung von Faltenpack und Dichtung zueinander während der Montage in das Gehäuse dadurch vermieden wird, so daß die Montage erleichtert ist.

Bei der beanspruchten Filteranordnung ist von Vorteil, daß der Faltenpack durch die ungehaftete Befestigung problemlos aus dem Gehäuse entfernt werden kann, um beispielsweise im Anschluß an seine Verwendung durch einen neuen Faltenpack, der von einer Dichtung umschlossen ist, ersetzt werden zu können. Das Gehäuse ist daher beliebig oft wiederverwendbar.

Die beanspruchte Filteranordnung wird derart hergestellt, daß eine Platte aus polymerem Werkstoff zu einem Gehäuse mit im wesentlichen topfförmigen Querschnitt tiefgezogen wird und dann der Boden, mit Ausnahme des Anschlags ausgestanzt wird, wobei der Außenumfang des Faltenpacks mit der Dichtung zumindest einmal vollständig umwickelt wird und wobei der umwickelte Faltenpack bis zum Anschlag in das Gehäuse eingepreßt wird.

Der Faltenpack und die Dichtung werden bevorzugt miteinander verklebt. Dadurch ist eine einfache Montage der vormontierbaren Einheit, bestehend aus Faltenpack und Dichtung in das Gehäuse gewährleistet.

### Kurzbeschreibung der Zeichnung

Die erfindungsgemäße Filteranordnung sowie das Verfahren zu deren Herstellung werden nachfolgend anhand der Zeichnungen weiter erläutert. Diese zeigen in jeweils schematischer Darstellung:
Figur 1 einen Querschnitt durch ein Ausführungsbeispiel einer erfindungsgemäßen Filteranordnung,
Figur 2 eine Draufsicht auf die Filteranordnung aus Figur 1,
Figur 3 eine Ansicht der Filteranordnung aus Figur 1 von unten und
Figur 4 eine perspektivische Darstellung des Gehäuses.

### Ausführung der Erfindung

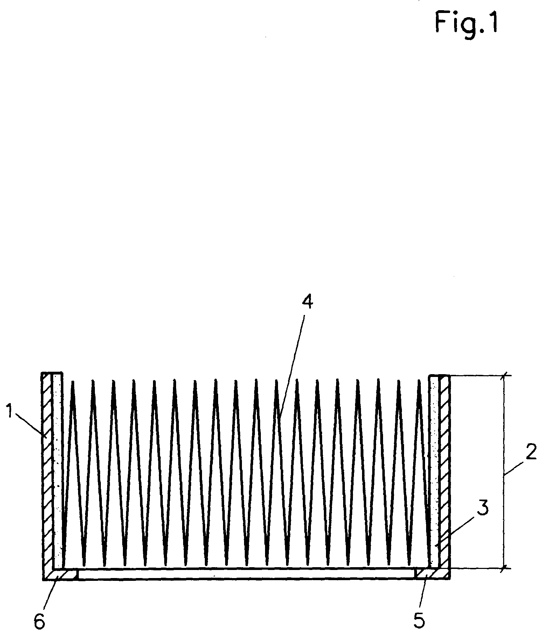

In den Figuren 1 bis 3 ist ein Ausführungsbeispiel einer erfindungsgemäßen Filteranordnung gezeigt. Die Filteranordnung umfaßt eine vormontierbare Einheit, bestehend aus einem Faltenpack 4, der von einer Dichtung 3 umfangsseitig auf seiner gesamten Höhe umschlossen ist, wobei die vormontierbare Einheit im nichteingebauten Zustand, bezogen auf den Einbauraum im Gehäuse 1 ein Übermaß aufweist. Der Faltenpack 4 ist daher unter elastischer Vorspannung dichtend und ungehaftet im Gehäuse 1 angeordnet. Die Dichtung 3 zwischen dem Faltenpack 4 und dem Gehäuse 1 erfolgt lediglich durch eine elastische Verpressung der Dichtung 3.

In diesem Ausführungsbeispiel besteht der Faltenpack 4 aus Glasfaserpapier und die Dichtung 3 aus einem Vliesstoff, wobei der Faltenpack 4 und die Dichtung 3 miteinander verklebt sind.

In Figur 1 ist zu erkennen, daß das Gehäuse 1 einen im wesentlichen topfförmigen Querschnitt aufweist. Das Gehäuse 1 besteht aus einem tiefgezogen, polymeren Werkstoff, wobei der Boden 6 des Gehäuses 1 nur noch durch den Anschlag 5 gebildet ist, der am Gehäuse 1 abströmseitig nach innen vorspringt. Der Rest des Bodens 6, innenseitig vom Anschlag 5, wurde aus dem polymeren Werkstoff ausgestanzt, wobei die Anschläge 5 eine möglichst geringe Ausdehnung in Richtung des Faltenpacks 4 aufweisen sollten, um den Abströmquerschnitt nicht unnötig stark einzuschränken.

Der Faltenpack 4 ist auf seiner gesamten Höhe 2 von der Dichtung 3 umfangsseitig umschlossen, um einen Strömungskurzschluß zwischen der An- und der Abströmseite des Faltenpacks 4 zu verhindern.

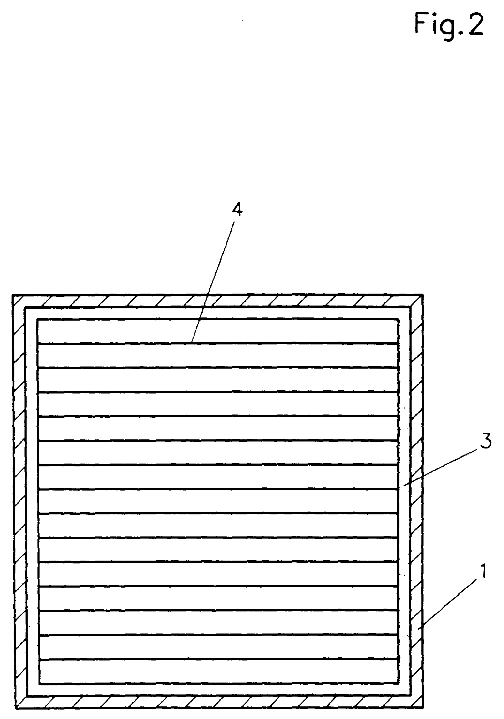

In Figur 2 ist eine Draufsicht auf die Anströmseite der Filteranordnung gezeigt. Es ist zu erkennen, daß die aus Vliesstoff bestehende Dichtung 3 den Faltenpack 4 umfangsseitig vollständig umschließt und die dem Faltenpack (4) zugewandte Innenseite des Gehäuses 1 in jedem Teilbereich unter elastischer Vorspannung dichtend berührt.

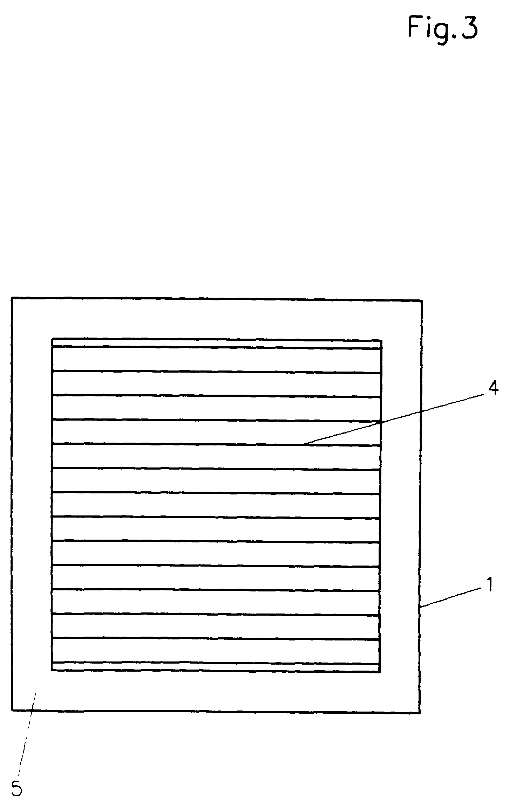

In Figur 3 ist eine Ansicht der Filteranordnung aus Figur 1 von unten gezeigt. Es ist zu erkennen, daß der Anschlag 5 blendenförmg ausgebildet ist und sich entlang des gesamten Umfangs des Gehäuses 1 erstreckt. Der Anschlag 5 weist eine nach innen gerichtete Ausdehnung auf, die größer ist als die Dicke der Dichtung 3. Dadurch wird sicher gestellt, daß nicht nur die Dichtung 3 den Anschlag 5 berührt sondern auch zumindest eine Falte des Faltenpacks 4. Eine exakte Positionierung des Faltenpacks 4, bezogen auf das Gehäuse 1, ist dadurch gewährleistet.

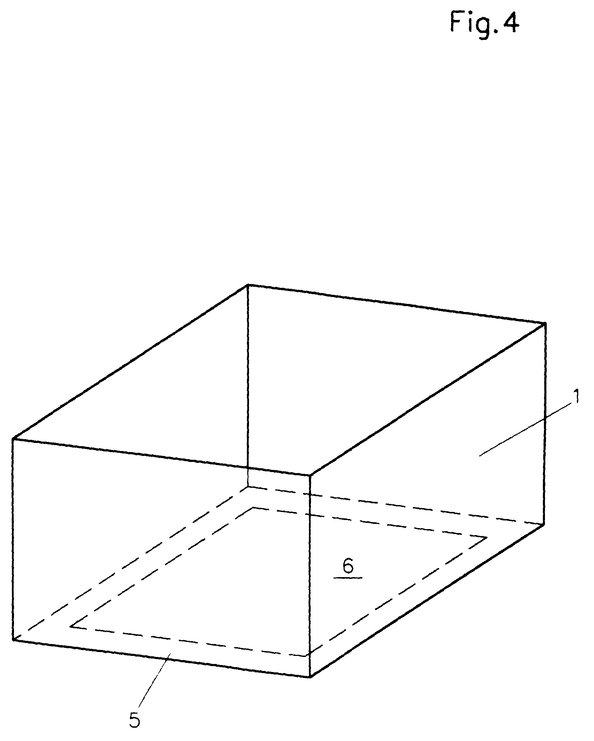

In Figur 4 ist das Gehäuse 1 perspektivisch dargestellt. Das Gehäuse 1 wird aus einer Folie aus polymerem Werkstoff durch Tiefziehen hergestellt und ist daher einstückig ausgebildet. Im Anschluß an den Tiefziehvorgang wird der Boden 6 innerhalb des Anschlags 5 ausgestanzt.

## Patentansprüche

1. Filteranordnung, umfassend einen Faltenpack (4), der dichtend in einem Gehäuse (1) angeordnet ist, **dadurch gekennzeichnet**, daß das Gehäuse (1) herstellungsbedingt einstückig tiefgezogen ist.

2. Filteranordnung nach Anspruch 1, dadurch gekennzeichnet, daß das Gehäuse (1) aus einem polymeren Werkstoff besteht.

3. Filteranordnung nach einem der Ansprüche 1 oder 2, dadurch gekennzeichnet, daß der Faltenpack (4) auf seiner gesamten Höhe (2) mit einer Dichtung (3) umfangsseitig zumindest einmal vollständig umschlossen ist und daß die Dichtung (3) das Gehäuse (1) unter elastischer Vorspannung dichtend und ungehaftet berührt.

4. Filteranordnung nach einem der Ansprüche 1 bis 3, dadurch gekennzeichnet, daß das Gehäuse (1) abströmseitig einen nach innen vorspringenden Anschlag (5) für den Faltenpack (4) aufweist.

5. Filteranordnung nach einem der Ansprüche 1 bis 4, dadurch gekennzeichnet, daß die Dichtung (3) aus einem Vliesstoff besteht.

6. Filteranordnung nach einem der Ansprüche 1 bis 5, dadurch gekennzeichnet, daß der Faltenpack (4) aus einem Vliesstoff besteht.

7. Filteranordnung nach einem der Ansprüche 1 bis 6, dadurch gekennzeichnet, daß der Faltenpack (4) und die Dichtung (3) adhäsiv verbunden sind.

8. Verfahren zur Herstellung einer Filteranordnung nach einem der Ansprüche 1 bis 7, wobei eine Folie aus polymerem Werkstoff zu einem Gehäuse (1) mit im wesentlichen topfförmigen Querschnitt tiefgezogen und dann der Boden (6) mit Ausnahme des Anschlags (5) ausgestanzt wird, wobei der Außenumfang des Faltenpacks (4) mit der Dichtung (3) zumindest einmal vollständig umwickelt wird und wobei der umwickelte Faltenpack (4) bis zum Anschlag (5) in das Gehäuse (1) eingepreßt wird.

9. Verfahren nach Anspruch 8, dadurch gekennzeichnet, daß der Faltenpack (4) und die Dichtung (3) verklebt werden.
